# EUROPEAN PATENT SPECIFICATION

(11) **EP 0 936 971 B1**
(45) Date of publication and mention of the grant of the patent: **02.06.2004**
(21) Application number: 97911987.2
(22) Date of filing: 04.11.1997
(51) Int. Cl.: B32B 3/30, E04F 15/20

(54) **USE OF A SOUND ABSORBING SUBSTRATE AS AN UNDERLAYER IN A FLOORING STRUCTURE**
VERWENDUNG EINES SCHALLDÄMMENDEN SUBSTRATES ALS UNTERLAGE IN EINER BODENSTRUKTUR
UTILISATION D'UN SUBSTRAT ABSORBANT PHONIQUE COMME SOUS-COUCHE D'UNE STRUCTURE DE PLANCHER

(30) Priority: 08.11.1996 CA 2190024
(43) Date of publication of application: 25.08.1999
(73) Proprietor: Royal Mat International Inc., Beauceville, Beauce, Quebec GOS 1AO (CA)
(72) Inventor: DUCHARME, Robert, Sainte-Anne-des-Prairies, Quebec J3N 1H0 (CA)
(74) Representative: Moncheny, Michel
(86) International application number: PCT/CA1997/000836
(87) International publication number: WO 1998/021027

(56) References cited:
- WO-A-89/00227
- DE-A- 3 020 706
- DE-A- 3 505 458
- DE-A- 4 212 757
- DE-A- 4 302 987
- DE-U- 29 501 727
- GB-A- 2 299 293
- US-A- 4 753 841
- US-A- 4 910 935

## Description

### FIELD OF THE INVENTION

The invention relates to the use of a sound absorbing substrate as an underlayer in a flooring structure of either commercial, residential or industrial building.

### BACKGROUND OF THE INVENTION

The floors of the buildings or houses usually comprise a subfloor or foundation commonly made of unfinished wood or concrete, and a top floor having a visible upper finished surface. The top floor may consist of one or more layers of wood, resilient tile or sheet, ceramic tile, carpet, linoleum, etc.

It is known in the art that an intermediate layer (also called "underlayer") can be inserted between the subfloor and the top floor so as to provide resiliency and sound absorbing properties to the same. These layers are commonly manufactured as substrates that can be laid and secured onto the subfloor. In this connection reference can be made to the following documents which disclose underlayers consisting of a layer of cellular foam or rubber.
U.S. Patent Nos.:
   2,811,906 (Chappel)
   3,579,941 (Tibbals)
   4,11,2,176 (Baileys)
   4,753,841 (Noël)
   5,016,413 (Counihan)
Germain laid-open application Nos.:
   30 20 706 (Mittelfrankische Turngeräte...)
   4 212 757 (Flexokem A.G.)

Other documents, such as, for examples, U.S. patent No. 4,109,041 (Tellman) and the defensive publication U.S. T931,006 (Akron), suggest that the rubber may come from recycled used tires.

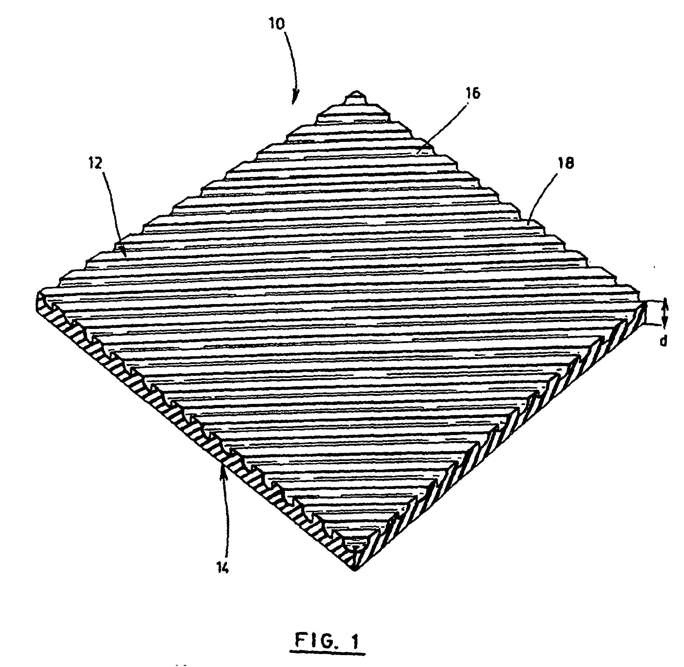

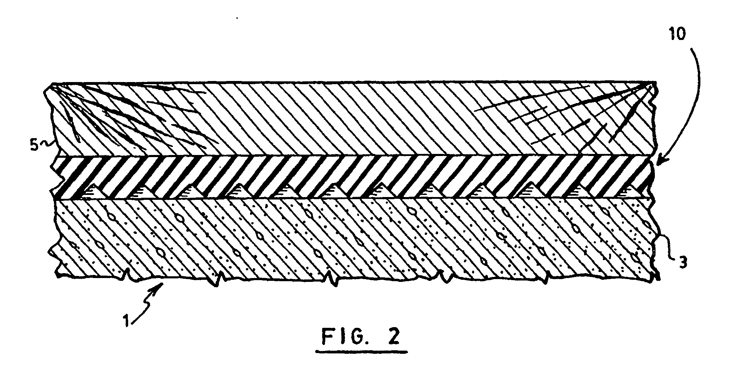

U.S. patent No.4,759,164 relates to a flooring structure which comprises an underlayer made of a resilient material. The bottom surface of this underlayer is provided with spaced-out channels of a substantially U-shaped cross-section (see figures 4 to 6 of it). The channels are spaced apart from one another and used as a venting system. Because of these channels, only a portion of the overall bottom surface of the underlayer is in contact with the subfloor. However, this portion represents more than 75% of the overall bottom surface.

As can be easily understood, it is desirable that the substrates used as underlayers in a flooring structure be manufacturable at a given cost while showing good sound absorbing properties.

It is also desirable that such substrates be provided with good acoustic insulation properties while having a minimum thickness.

It is further desirable that such substrates meet all the following very stringent requirents to make them commercially acceptable:
- to be "stable" and able to keep sound-absorbing properties for at least 30 years;
- to be rigid and strong enough both at the level of its top surface (durometer hardness of at least 95) and as a whole (durometer hardness of 50 to 70) to support the physical constraints and impacts exerted onto the top layer;
- to have a top surface to which the top floor of the flooring can be directly laid on and secured, preferably by means of a glue;
- to be fire- and flame-resistant;
- to be sound-absorbent with a sound transmission coefficient (STC) to aerial noise equal to or higher than 50 and an impact insulation classification (IIC) equal to or higher than 70.

### SUMMARY OF THE INVENTION

The present invention is directed to a flooring structure including an underlayer made of a resilient, sound absorbing substrate that satisfies the above-mentioned requirements of the industry.

More particularly, the invention provides a flooring structure including:
- a subfloor of a given surface area;
- an underlayer laid on top and secured to the subfloor, said underlayer having the same surface area as the subfloor and consisting of a sound absorbing substrate made of a resilient material, the substrate comprising a bottom surface, a top surface and side edges, the bottom surface being provided with cavities leaving a portion only of the bottom surface in contact with the subfloor, the top surface being flat and plain, the portion of the bottom surface of the substrate in contact with the subfloor representing from 15 to 65% of the given surface area; and
- a top floor laid on top and secured to the underlayer;
characterized in that:
- the cavities provided in the bottom surface of the substrate consists of grooves of U- or V-shaped cross-section that are parallel to each other and extend at an angle with respect to the side edges of the substrate; and
- the resilient material is made from recycled rubber.

In accordance with the invention, it has been found that all the above requirements of the industry are met when use is made of an underlayer consisting of a substrate having a top surface that is flat and plain viz. not slitted or hollowed (such being essential to allow fixation of the top floor of the flooring with a glue) and a bottom surface provided with U- or V-shaped grooves sized in such a manner that the portion of the bottom surface of the substrate that is in contact with the subfloor represents from 15 to 65% of the surface area of this subfloor.

The fact that the grooves are U- or V-shaped is important to meet the above mentioned requirements for (1) sufficient strength and (2) a STC equal to at least 50. Indeed, if the bottoms of the grooves are flat and parallel to the top floor and subfloor, the mechanical resistance to vertical constraints will be reduced and the transmission of stationary sound-waves will not be "eliminated".

The fact that the surface ratio of the portion of the bottom surface of the substrate in contact with the subfloor ranges between 15 and 65%, preferably 20 to 50%, is also essential. Indeed, it has been found that by reducing the surface in contact with the subfloor, one may reduce and absorb in part the energy which is transferred by the flooring structure when sound hits the floor. Therefore, the resulting sound produced on the other side of the flooring structure is reduced accordingly.

In accordance with preferred embodiment of the invention, the recycled rubber from which the substrate is made, preferably consists of particles of used tires.

Preferably also, the substrate has a thickness ranging between 11/64" (4.4 mm) and 3" (76.2 mm) and more particularly between 3/8" (9.52 mm) and 1" (25.4 mm).

Other objects, features and advantages of the present invention will be apparent upon reading the following non-restrictive description of a preferred embodiment thereof made with reference to the accompanying drawing.

### BRIEF DESCRIPTION OF THE DRAWING

Fig. 1 is a perspective view in partial cross-section, of a substrate according to a preferred embodiment of the invention shown in an upside down position.
Fig. 2 is a cross-sectional view of a flooring structure incorporating a substrate similar to the one shown in Fig. 1, except that its grooves are V-shaped instead of being U-shaped.

### DETAILED DESCRIPTION OF A PREFERRED EMBODIMENT

The flooring structure 1 according to the preferred embodiment of the invention as shown in the accompanying drawings, comprises a subfloor 3, a top floor 5 and an underlayer consisting of a substrate 10 made of a resilient material showing good sound absorbing properties.

The substrate 10 comprises a bottom surface 12 sized to cover a given surface area of the subfloor 3 of flooring structure 1. It also comprises a top surface 14 that is flat and plain, and a set of side edges. These edges are preferably perpendicular to each other, thereby giving a square or rectangular shape to the substrate. However, the substrate 10 could be of another shape or could be cut to fit any particular shape and size of a given subfloor.

The bottom surface 12 is provided with cavities which consist of grooves 16 that are preferably straight and parallel. These grooves leave only a portion of the bottom surface 12 in contact.with the subfloor when the substrate is installed. In accordance with an important aspect of the invention, the surface ratio of the portion of the bottom surface 12 in contact with the subfloor to the given surface area covered by this bottom surface ranges between 15 and 65%. Preferably, this surface ratio ranges from 20 to 50% and more preferably from 15 to 43%. As best shown in the drawings, the grooves 16 have a U-shaped or V-shaped cross-section, thereby leaving flat surface strips 18 therebetween on the bottom surface 12.

A cross-section of the flooring structure 11 which is so obtained is shown in Fig.2. This cross-section is taken perpendicular to the V-shaped grooves 16 of the substrate 10. The substrate 10 used as an underlayer is laid on top and secured to the subfloor 3. The underlayer has the same surface area as the subfloor 22. The top floor 5 is laid on top and secured preferably by gluing to the substrate 10.

As aforesaid, the substrate 10 is preferably made as a mat that is rectangular or square in shape to allow easy manufacturing and facilitate installation. In such a case, it is very desirable that the grooves 16 and strips 18 do not extend in parallel relationship with respect to one of the side edges of the substrate 10. As shown in the drawing, it is preferred that the grooves 16 extend at an angle of about 45° with respect to one of the side edges of the substate 10. As floors are ususally rectangular in shape, and substrates 10 are commonly laid in parallel relationship with respect to the longest walls, such particular positions of the grooves 16 will allow all the side edges of the bottom surface 12 to be cut and present the very same shape and cross-section as any of the other portions of the substrate 10. This cannot be obtained with "parallel-to-one-of-the-edge" grooves. With these kind of grooves, the cut may take place inside or near a groove, thereby creating a fragile edge not resistant to compression, which is obviously not desirable. Although the parallel grooves 16 extending at an angle of about 45° are particularly suitable in the case of floors of rectangular shape, the grooves 16 may adopt other designs in order to fit with other particular floor shapes. Such designs may be symmetrical or non symmetrical or made of parallel lines like arcs of circles or concentric circles, ovals, spread out or star-shaped lines, etc. Furthermore the depth of the grooves 16 may vary and thus present an homogeneous or non homogeneous thickness.

A suitable resilient material for the manufacture of the substrate should advantageously show characteristics desirable in house and building constructions, should be fireproof or fire retardant, waterproof, bactericide, termite resistant etc.

A particularly suitable material for the manufacturing of the substrate 10 is recycled rubber. Such rubber can be made from particles of used tires which are thereby recycled. The granulometry of such particles is advantageously up to 2.5 mm. These particles are thermo-compressed (heat and pressure molded) and cured to shape a monolayer substrate 10 according to the invention.

The material that can be so obtained from particles of used tire or from any other rubber made component, usually comprises in addition to rubber hydrocarbon, a significant content of black carbon. Depending on the origin of the rubber the material may also contain acetone extract, ash, moisture, free iron, free fabric and other additives.

It should be noted that the use of recycled rubber like recycled used tires as starting material to prepare the substrates 10 is particularly advantageous since such products are available and present good resilient and sound absorbing qualities. Moreover, substrates manufactured with such a material present a high carbon concentration. The presence of carbon gives to the material a good thermic conductivity which gives it radiant properties and may be useful in the case of a heated floor. In this connection, the thickness of the substrate 10 may even be endowed with a network of metallic wires according to the usual and well-known technique.

The substrates 10 made from the above material were tested. Such substrates 10 presented a surface ratio of about 37%, and a thickness referenced as "d" in the figure of about 7/8" (22.2 mm). The distance between the two central axis of the two adjacent grooves 16 was equal to about 5/16" (79.4 mm). These substrates 10 showed particularly good sound absorbing properties and, more particularly, good shock-sound absorbing properties which met all the Canadian and American standards. Thus, the substrates 10 according to the invention may advantageously replace existing substrates whose portion of the surface in contact with the ground is higher than 75% of their overall surface and whose thickness is between a third and half more.

Conglomerate, composite or multi composite materials made of one or more kind of particles or fibers along with recycled rubber as starting material may advantageously be used to improve acoustical, mechanical or thermic charac-teristics of the substrate. These particles or fibers, organic or inorganic, may be synthetic, like plastic, or natural, like cellulose. Atomic elements like carbon may also be added in the composition of the substrate. To manufacture the substrate of the invention these particles or fibers may be thermo-compressed or embedded in a binder.

The substrate may be provided with a top surface which may be made of fabric like polyethylene, cotton or cellulose and secured to the resilient substrat with an appropriate adhesive.

As above-mentioned, the substrate 10 is intended to be used as an intermediate (viz. underlayer) in a flooring structure. The bottom surface 12 of the substrate 10 is in contact with the subfloor 3 which is usually made of concrete or wood. The substrate 10 is cut to the desired dimension and can be secured to the subfloor by means of, for example, an appropriate adhesive. This is well known in the art and does not need to be further described. The top surface of the substrate 10 is flat and plain to allow the top floor 5 to be easily and permanently fixed thereto preferably by gluing. This top floor 5 may consist of a wood flooring or of tiles. To facilitate fixation of the top floor, the top surface of the substrate may be slightly corrugated.

Although a preferred embodiment of the invention has been described in detail herein and illustrated in the accompanying drawings, it is to be understood that the invention is not limited to the precise embodiment. In particular, the surface ratio and the thickness of the substrate, and the nature of the material used for its manufacture, may vary within the scope of the appended claims, depending on the structure and the nature of the subfloor, the structure of the building and, the dimension of the floor.

## Claims

1. A flooring structure (1) including:
- a subfloor (3) of a given surface area;
- an underlayer laid on top and secured to the subfloor, said underlayer having the same surface area as the subfloor and consisting of a sound absorbing substrate (10) made of a resilient material, said substrate (10) comprising a bottom surface (12), a top surface (14) and side edges, the bottom surface being provided with cavities (16) leaving a portion only of said bottom surface in contact with the subfloor, the top surface (14) being flat and plain, the portion of the bottom surface (12) of the substrate in contact with the subfloor (13) representing from 15 to 65% of the given surface area; and
- a top floor (5) laid on top and secured to the underlayer;
**characterized in that**:
- the cavities (16) provided in the bottom surface of the substrate consists of grooves of U- or V-shaped cross-section that are parallel to each other and extend at an angle with respect to the side edges of the substrate; and
- the resilient material is made from recycled rubber.

2. The flooring structure of claim 1, **characterized in that** the portion of the bottom surface of the substrate (10) that is in contact with the subfloor represents from 20 to 50% of the given surface area.

3. The flooring structure of claim 1 or 2, **characterized in that** the angle at which the grooves (16) extend is 45°.

4. The flooring structure of any one of claims 1 to 3, **characterized in that** each of the grooves (16)has a central axis and the central axes of every pair of two adjacent groove are spaced apart at a distance of 5/16" (7.94 mm).

5. The flooring structure of any one of claims 1 to 4, **characterized in that** the recycled rubber consists of particles of used tires, said particles having a granulometry of up to 2.5 mm.

6. The flooring structure of any one of claims 1 to 5, **characterized in that** the substrate (10) has a thickness equal to or lower than 3" (76.2 mm).

7. The flooring structure of claim 6, **characterized in that** the substrate (10) has a thickness ranging from 3/8" (9.52 mm) to 1" (25.4 mm).

8. A flooring structure (1) of a house or a building, said structure (1) including:
- a subfloor (3) of a given surface area that is made of wood or concrete;
- an underlayer laid on top and secured to the subfloor, said underlayer having the same surface area as the subfloor and consisting of a sound absorbing substrate (10) made of a resilient material, said substrate (10) comprising a bottom surface (12), a top surface (14) and side edges, the bottom surface being provided with cavities leaving a portion only of said bottom surface in contact with the subfloor, the top surface (14) being flat and plain and the portion of the bottom surface (12) of the substrate that is in contact with the subfloor (13) representing from 20 to 50% of the given surface area;
- a top layer (5) laid on top and secured to the underlayer, said top layer consisting, of a wood flooring or of tiles;
**characterized in that**:
- the resilient material is made from recycled rubber consisting of particles of used tires, said particles having a granulometry of up to 2.5 mm;
- the substrate (11) has a thickness equal to or lower than 3" (76.2 mm); and
- the cavities (16) provided in the bottom surface of the substrate consists of grooves of U- or V-shaped cross-section, said grooves (16) being parallel and extending at an angle with respect to the side edges of said substrate.

## Patentansprüche

1. Bodenstruktur umfassend
- einen Unterboden (3) eines vorgegebenen Oberflächenbereichs;
- eine auf den Unterboden gelegte und daran befestigte Unterlage, wobei die Unterlage den gleichen Oberflächenbereich wie der Unterboden und ein aus einem elastischen Material gebildetes Schall absorbierendes Substrat (10) aufweist, wobei das Substrat (10) eine untere Oberfläche (12), eine obere Oberfläche (14) und Seitenkanten aufweist, wobei die untere Oberfläche (12) mit nur einen Teil der unteren Oberfläche (12) in Kontakt mit dem Unterboden (3) belassenden Vertiefungen (16) ausgestattet ist, die obere Oberfläche (14) glatt und flach ist, der in Kontakt mit dem Unterboden (13) stehende Teil der unteren Oberfläche (12) des Substrats 15-65% des vorgegebenen Oberflächenbereichs darstellt; und
- einen Oberboden (5) der auf die Unterlage gelegt und mit dieser befestigt ist;
**dadurch gekennzeichnet, dass**
- die in der unteren Oberfläche des Substrats vorgesehenen Vertiefungen (16) Nuten mit U- oder V-förmigen Querschnitt aufweisen, die parallel zueinander und in einem Winkel zu den Seitenkanten des Substrats verlaufen; und
- das elastische Material aus receyceltem Gummi ist.

2. Bodenstruktur nach Anspruch 1, **dadurch gekennzeichnet, dass** der in Kontakt mit dem Unterboden stehende Bereich der unteren Oberfläche des Substrats (10) 20-50% des vorgegebenen Oberflächenbreichs darstellt.

3. Bodenstruktur nach Anspruch 1 oder 2, **dadurch gekennzeichnet, dass** der Winkel, in dem die Nuten (16) verlaufen, 45° beträgt.

4. Bodenstruktur nach einem der Ansprüche 1 bis 3, **dadurch gekennzeichnet, dass** die Nuten (16) zentrale Achsen aufweisen und die zentralen Achsen eines jeden Paars von zwei benachbarten Nuten mit einem Abstand von 5/16" (7, 94 mm) beabstandet sind.

5. Bcdenstruktur nach einem der Ansprüche 1 bis 4, **dadurch gekennzeichnet, dass** das recycelte Gummi aus Partikeln gebrauchter Reifen ist, wobei die Partikel eine Granulometrie von bis zu 2,5 mm aufweisen.

6. Bodenstruktur nach einem der Ansprüche 1 bis 5, **dadurch gekennzeichnet, dass** das Substrat (10) eine Dicke kleiner oder gleich 3" (76,2 mm) hat.

7. Bodenstruktur nach Anspruch 6, **dadurch gekennzeichnet, dass** das Substrat (10) eine Dicke zwischen 3/8" (9,52 mm) und 1" (25,44 mm) hat.

8. Bodenstruktur (1) eines Hauses oder eines Gebäudes, wobei die Struktur (1) umfasst:
- einen Unterboden (3) eines aus Holz oder Zement gebildeten vorgegebenen Oberflächenbereichs;
- eine auf den Unterboden gelegte und daran befestigte Unterlage, wobei die Unterlage den gleichen Oberflächenbereich wie der Unterboden und ein aus einem elastischen Material gebildetes Schall absorbierendes Substrat (10) aufweist, wobei das Substrat (10) eine untere Oberfläche (12), eine obere Oberfläche (14) und Seitenkanten aufweist, wobei die untere Oberfläche (12) mit nur einen Teil der unteren Oberfläche (12) in Kontakt mit dem Unterboden (3) belassenden Vertiefungen (16) ausgestattet ist, die obere Oberfläche (14) glatt und flach ist, und der in Kontakt mit dem Unterboden (13) stehende Teil der unteren Oberfläche (12) des Substrats 20-50% des vorgegebenen Oberflächenbereichs darstellt;
- eine einen Holzboden oder Kacheln aufweisende obere Lage (5) die auf die Unterlage gelegt und an dieser befestigt ist;
**dadurch gekennzeichnet, dass**
- das elastische Material aus recyceltem Gummi mit Partikeln gebrauchter Reifen ist, wobei die Partikel eine Granulometrie von bis zu 2,5 mm aufweisen;
- das Substrat (11) eine Dicke kleiner oder gleich 3" (76,2 mm) hat; und
- die in der unteren Oberfläche des Substrats vorgesehenen Vertiefungen (16) Nuten mit U- oder V-förmigen Querschnitt aufweisen, wobei die Nuten (16) parallel und mit einem Winkel zu den Seitenkanten des Substrats verlaufen.

## Revendications

1. Une structure de plancher (1 ) incluant :
- un sous-plancher (3) d'une surface donnée;
- une sous-couche disposée sur le sous-plancher et fixée à celui-ci, cette sous-couche ayant la même surface que le sous-plancher et consistant en un substrat absorbant les sons (10) fait d'un matériau résilient, ledit substrat (10) comprenant une surface de dessous (12), une surface de dessus (14) et des arêtes de côté, la surface de dessous étant pourvue de cavités (16) laissant une portion seulement de ladite surface de dessous en contact avec le sous-plancher, la surface de dessus (14) étant plate et lisse, la portion de la surface de dessous (12) du substrat en contact avec le sous-plancher (13) représentant de 15 à 65% de ladite surface du sous-plancher; et
- un plancher de dessus (5) disposé sur la sous-couche et fixé à celui-ci;
**caractérisé en ce que** :
- les cavités (16) faites dans la surface de dessous du substrat consistent en des rainures de sections en forme de U ou V qui sont parallèles les unes aux autres et s'étendent à angle par rapport aux arêtes latérales du substrat; et
- le matériau résiliant est fait de caoutchouc recyclé.

2. La structure de plancher de la revendication 1, **caractérisée en ce que** la portion de la surface de dessous du substrat (10) qui est en contact avec le sous-plancher représente de 20 à 50% de la surface donnée dudit sous-plancher.

3. La structure de plancher de la revendication 1 ou 2, **caractérisée en ce que** l'angle dans lequel s'étendent les rainures (16) est de 45°

4. La structure de plancher de l'une quelconque des revendications 1 à 3, **caractérisée en ce que** chacune des rainures (16) a un axe central et les axes centraux de chaque paire de deux rainures adjacentes sont espacés d'une distance de 7/16" (7,94 mm).

5. La structure de plancher de l'une quelconque des revendications 1 à 4, **caractérisée en ce que** le caoutchouc recyclé consiste en particules de pneus usés, lesdites particules ayant une granométrie allant jusqu'à 2,5 mm.

6. La structure de plancher de l'une quelconque des revendications 1 à 5, **caractérisée en ce que** le substrat (10) a une épaisseur égale ou inférieure à 3" (76,2 mm).

7. La structure de plancher de la revendication 6, **caractérisée en ce que** le substrat (10) a une épaisseur comprise entre 3/8" (9,52 mm) et 1" (25,4 mm).

8. Une structure de plancher (1) d'une maison ou d'un édifice, ladite structure (1) incluant :
- un sous-plancher (3) d'une surface donnée qui est fait en bois ou en ciment;
- une sous-couche disposée sur le sous-plancher et fixée à celui-ci, ladite sous-couche ayant la même surface que le sous-plancher et consistant en un substrat absorbant les sons (10) fait d'un matériau résilient, ledit substrat (10) comprenant une surface de dessous (12), une surface de dessus (14) et des arêtes de côté, la surface de dessous étant pourvue de cavités laissant une portion seulement de ladite surface de dessous en contact avec le sous-plancher, la surface de dessus (14) étant plate et lisse et la portion de la surface de dessous (12) du substrat qui est en contact avec le sous-plancher (13) représentant de 15 à 65% de ladite surface du sous-plancher;
- un plancher de dessus (5) disposé sur la sous-couche et fixé à celle-ci, ledit plancher de dessus consistant en un plancher de bois et de tuile;
**caractérisé en ce que** :
- le matériau résilient est fait de caoutchouc recyclé constitué de particules de pneus usés, lesdits particules ayant une granulométrie allant jusqu'à 2,5 mm;
- le substrat (11) a une épaisseur inférieure ou égale à 3" (76,2 mm); et
- les cavités (16) faites dans la surface de dessous du substrat consistent en des rainures de sections en forme de U ou de V, lesdites rainures (16) étant parallèles et s'étendant à angle par rapport aux arêtes latérales dudit substrat.
